# EUROPEAN PATENT SPECIFICATION

(11) **EP 0 310 209 B1**
(45) Date of publication and mention of the grant of the patent: **14.04.1993**
(21) Application number: 88202477.1
(22) Date of filing: 30.01.1986
(51) Int. Cl.: G03G 15/09, G03G 17/00

(54) **Image forming device**
Bildaufzeichnungsvorrichtung
Dispositif de formation d'images

(30) Priority: 06.02.1985 NL 8500319
(43) Date of publication of application: 05.04.1989
(62) Divisional of application: 86200129.4
(73) Proprietor: Océ-Nederland B.V., 5914 CC Venlo (NL)
(72) Inventor: Van Cooten, Robertus, NL-5971 AH Grubbenvorst (NL); Simons, Dick, NL-5921 CW Venlo (NL); Draai, Willem Tjark, NL-5924 EH Venlo (NL); Van Stiphout, Johannes, Gerardus Venantius, NL-5741 XE Beek en Donk (NL); Witteveen, Bontko, NL-5924 EC Venlo (NL); Huijben, Martinus Johannes, NL-5971 BC Grubbenvorst (NL)
(74) Representative: Hanneman, Henri W., Dr.

(56) References cited:
- GB-A- 2 126 925
- JP-A-59 224 369
- US-A- 4 062 321
- US-A- 4 354 454

## Description

This invention relates to an image forming device for a printer comprising a magnetic roller having an electrically conductive non-magnetic sleeve and magnets disposed stationary inside the sleeve.

A printer comprising an image forming device of this kind is known from JP-A-59-224369. In this printer an electrode drum surrounded by a dielectric layer is available for cooperation with the image forming device through a knife-shaped linear member, which is disposed slidable on the sleeve.
When the printer is in operation, magnetizable conductive toner disposed over the rolating sleeve will be supplied to the linear member and only when an electrode of the drum is actuated by applying short voltage pulses between the sleeve and the said electrode, toner will be attracted to the dielectric layer adjacent to the electrode. By actuating a large number of such electrodes with time-dependent pulse shaped signals, a dotted toner image is obtained on the dielectric layer.
In an image forming device of the above kind an indirect transfer of toner from the sleeve to the drum and an irregular displacement of the toner along the member's walls take place. This results in a rather unsharp image on the electrode drum, which can be regarded as a disadvantage of the above image forming device.

It is the object of the invention to provide an image forming device according to the preamble without the above disadvantage. This object is attained in an image forming device of the above kind in that a soft-iron knife with a pointed edge is disposed between poles of the same polarity of two magnets inside the magnetic roller, the pointed edge of the knife extending in the axial direction of the roller and being situated adjacent the non-magnetic sleeve.

The effect is that a very sharp image-forming zone is achieved and sharp prints can be obtained.

These and other advantages will be apparent from the following description and associated drawings wherein:
Fig.1 is a drawing of the principle of an electrostatic printer,
Fig.2 is a schematic representation of an electrostatic layer with an image forming device according to the invention,
Figs.3a - 3d are schematic representations of the process applied,
Fig. 4 is a schematic representation of an inductive actuating method for the electrode paths,
Fig.5 is an equivalent circuit diagram of Fig.4,
Fig.6 is a section of another embodiment of a printer, and
Fig.7 is a top plan view of the section according to Fig.6.

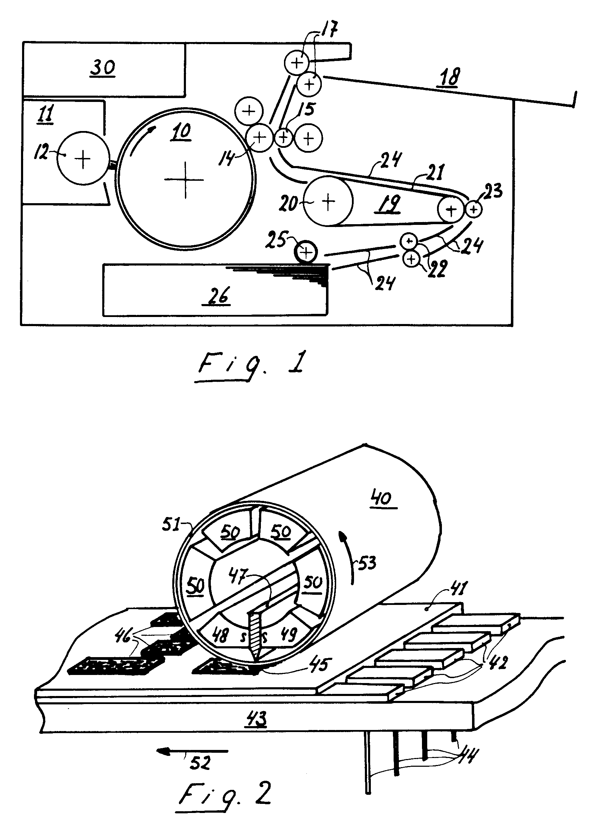

Fig.1 is a drawing of the principle of an electrostatic printer. An image-forming medium in the form of a rotating drum 10 comprises an electrostatic layer which is built up of a number of actuatable electrodes in and beneath a dielectric layer.
Image-forming station 11 with the magnetic developing roller 12 is filled with magnetically attractable conductive toner. A toner image can be formed on the electrostatic layer by the application of a voltage between the actuatable electrodes on rotating drum 10 and the developing roller 12. This toner image is transferred to a heated rubber-covered roller 14. One sheet of paper is fed to the paper preheating station 19 from the paper stock 26 by means of a roller 25 via guide tracks 24 and rollers 22 and 23. Paper preheating station 19 comprises a belt 21 trained about a heated roller 20. The contact between the sheet and the belt 21 causes the sheet to be heated. The sheet of paper thus preheated is passed through roller 15 and roller 14 and the toner image formed on roller 14 is completely transferred to the sheet of paper. The paper temperature is such that the toner image fuses on the paper. The sheet of paper is fed to the collecting tray 18 via conveyor rollers 17. Unit 30 comprises an electronic circuit which converts the optical information of an original into electrical signals which can be fed to the actuatable electrodes. Electrical signals originating from a computer or data-processor can be converted in unit 30 into signals which can be fed to the actuatable electrodes.

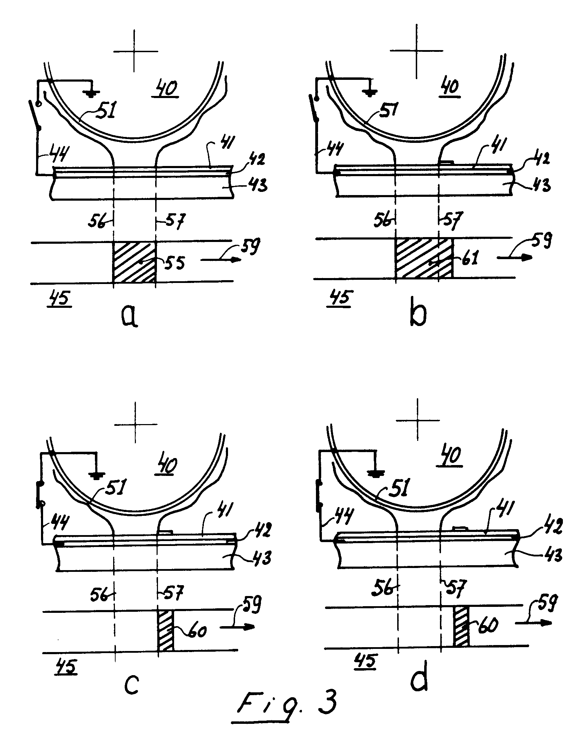

Fig. 2 represents the electrostatic layer with an image forming device according to the invention. The electrostatic layer is made up of an insulating support 43, a number of electrically conductive electrode paths 42 and above these a dielectric layer 41. Disposed above the layer is an image-forming station which feeds magnetic electrically conductive toner particles to the image-forming zone 45 between the dielectric layer 41 and the developing roller 40.

Support 43 is made from a flexible insulating material, e.g. Kapton and has a thickness of about 200 µm. A copper layer of a thickness of about 5 µm is disposed on this, small tracks of a width of about 20 µm being etched away therefrom by means of known exposure and etching technics, so that a track pattern is obtained consisting of 60 µm wide electrode paths 42 with 20 µm interstices. Other widths (from 10 µm to 200 µm), thicknesses and interstices (from 5 µm to 100 µm) can also be used.

Each electrode path 42 is connected via a lead 44 to a control device (not shown) which can feed voltage to each electrode path 42 via switching elements.

A dielectric layer 41 is disposed over and between the electrode paths 42. A stove enamel from Messrs. Red Spot Paint and Varnish Corporation, type Red Spot SM 952 R, was used for this layer. A solution of said enamel in an organic solvent is applied over the electrodes, a hard layer forming after heating.

Other materials may also be used to form a dielectric layer, such as barium titanate, aluminium oxide, titanium dioxide, lead titanate, etc.

The electrostatic layer is applied to a metal drum (not shown) and secured thereto by means of a clamp mechanism. In the event of damage a new layer can readily be fitted. The drum is provided with an opening in the form of a slot through which the leads 44 are taken between a control circuit (not shown) and the electrode paths 42.

In the case of non-endless electrode paths, the length of the electrode paths 42 must at least be equal to the length of the copy to be printed. To obtain a high printing capacity for the device, the time between two prints must be made as short as possible. This can be achieved by securing the electrostatic layer to a drum whose circumference is only a little larger than the length of the electrode paths 42. The electrode paths preferably each extend over at least 75% of the drum circumference.

Developing roller 40 is provided with a copper sleeve 51 about 50 µm thick rotating in the direction of arrow 53. A number of magnets 50 are disposed stationarily inside the sleeve and are intended to transport to the image-forming zone 45 the conductive magnetic toner particles which are applied to the sleeve 51 via means not shown. To obtain an image-forming zone with a sharp boundary a soft-iron knife 47 is disposed inside the sleeve 51 between magnets 48 and 49 which are in contact with the knife by poles of the same polarity. The electrostatic layer is taken past the developing roller 40 in the direction of arrow 52. Toner 46 is deposited on the dielectric layer 41 by the application of a voltage between one of the electrode paths 42 and the sleeve 51.
An explanation of how a relatively narrow zone can be developed with a relatively wide toner brush will now be explained with reference to Figs. 3a - 3d. The reference numerals in these Figures correspond to those used in Fig. 2 for like parts.

Developing roller 40 is provided with conductive magnetic toner which touches the dielectric layer 41 over an area indicated by broken lines 56 and 57. An electrode path 42 is disposed beneath this layer and can be fed, for example, with a positive electrical voltage with respect to the earthed sleeve 51 of developing roller 40 via lead 44.
To clarify the image-forming process, Figs. 3a - 3d always show a part of the dielectric layer at the developing roller in top plan view 45. The width of the top plan views 45 corresponds to the width of one electrode path. The dielectric layer is conveyed past the developing roller 40 in the direction of arrow 59.

In Fig. 3a, electrode path 42 is at a positive voltage with respect to sleeve 51. A brush current will flow via the conductive toner in the area 55 defined by the brush boundary lines 56 and 57, and as a result a charge will form on the top of the dielectic layer. An opposite mirror charge will thus be induced in the toner particles which are partially in contact with the dielectric layer 41. The electrical force between the dielectric layer 41 and the toner particles will thus become greater than the magnetic force which fixes the toner particles to the magnetic brush and the toner particles are attracted by the dielectric layer 41 in an area defined by lines 56 and 57. Area 55 is developed as a result. In the case of a dielectric layer 41 of a thickness of 1 µm, some 30 volt appear sufficient to obtain good blackening in area 55.

The layer is then conveyed on (Fig.3b) while the positive voltage is still present on the electrode path 42. Development continues normally so that the developed area 61 is now wider than indicated by the brush boundary lines 56 and 57.
If the electrode path 42 is then (Fig.3c) electrically connected to the sleeve 51, the charge of the dielectric layer 41 will flow off. The brush current in the area between the brush boundary lines 56 and 57 is no longer present and the magnetic forces of the magnets in the developing brush 40 applied to the toner particles are now greater than the electrical forces, so that no more toner is deposited. The toner already deposited outside the brush boundary lines 56 and 57 (area 60) is no longer attracted by the developing brush 40 because the magnetic forces applied to those particles have become too small for the purpose owing to the distance. On further conveyance of the layer (Fig.3d) a small area 60 narrower than the width of the toner brush is provided with toner in this way.

Of importance in the development of these narrow lines is the sharpness of the toner brush at the toner boundary line 57 and the conductivity of the toner.
This conductivity must be so large that the charge applied to the dielectric rapidly flows off when electrode path 42 is connected to the sleeve 51.

If voltage is applied continuously to an electrode path, a long line is developed. Since the development in the width, above an electrode path of a width of 60 µm, is always rather more than equivalent to that electrode path width, and since the interstice between two electrodes is about 20 µm, it is possible to develop a fully black area when a plurality of electrodes next to one another are actuated.

The above-described embodiment is very suitable for the production of prints of restricted dimensions (e.g. A4). The electrode paths must always be somewhat longer than the length of the print. When it is desired to make longer prints, it is possible to select an image-forming drum of a larger diameter, but there are limits to this.

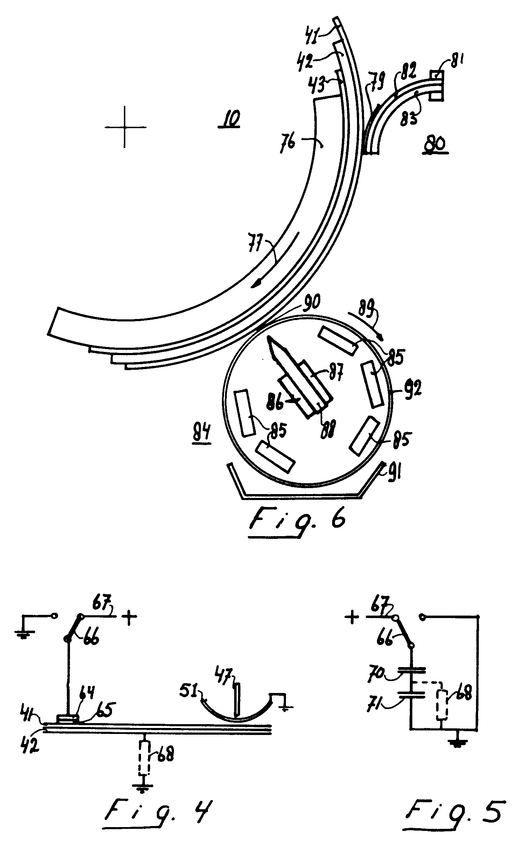

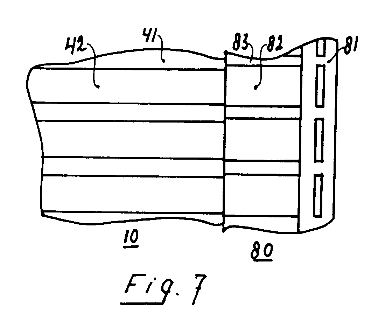

A better solution to this is obtained if the electrode paths in the dielectric layer around a drum are made endless. To this end, a metal drum is provided with an insulating layer to which a large number of endless electrode paths insulated from one another are applied in known manner. The stove enamel layer is applied over this, in a completely similar manner to that described with reference to Fig.2. If the image-forming drum has a larger diameter, the electrode paths can be connected to a control device disposed in the drum, as also described in connection with Fig.2. There is a problem, however, in respect of how the leads are to be secured to the electrode without any discontinuity occurring therein.
For these reasons an inductive actuation method can be applied, the operation of which will be described with reference to Fig.4.

In Fig.4 an electrode 42 is covered with a dielectric layer 41. An induction electrode 64 is also provided with a dielectric layer 65. The dielectric layer 41 can be in contact with the dielectric layer 65. A rotating sleeve 51 partially indicated, of a magnetic brush 40, in which a soft-iron knife 47 is disposed to form a narrow magnetic field, is earthed. The electrode 42 can also be earthed via a "high" resistance 68.

If the induction electrode 64 is now connected, for example, to a positive voltage 67 by means of a switch 66, an electric field will form between this induction electrode 64 and electrode 42. Opposite electrode 64 a negative charge will form in electrode 42.
A positive charge will thus form in the electrode 42 opposite to the earthed sleeve 51. If a conductive toner layer is present on this sleeve 51, this toner will be drawn to the dielectric layer 41 by induction of a mirror charge in the toner, by the positive charge on electrode 42. Image formation thus occurs.
If induction electrode 64 is earthed via switch 66, the electric fields will disappear and the magnetic force of the brush will hold the toner on said brush.

Fig.5 represents an equivalent circuit diagram of the device according to Fig.4. The capacitors 70 and 71 are connected in series and one side is connected to switch 66 while the other side is earthed. Capacitor 70 represents the capacity which is formed by the induction electrode 64 and the electrode 42. Capacitor 71 represents the capacity formed by the electrode 42 and the earthed sleeve 51 of the developing brush.
The "high" resistance 68 can be connected to the junction of capacitors 70 and 71. When a positive potential 67 is applied to the top plate of capacitor 70, a voltage division will occur over the two capacitors. If the capacitors 70 and 71 are of the same size, half the potential will occur at the junction between the two capacitors. The electric fields in the two capacitors 70 and 71 are then equal. By varying capacitor 70, e.g. by varying the thickness of the dielectric layer 41, it is possible to vary the magnitude of the electric field in capacitor 71, and hence the magnitude of the field between electrode 42 and sleeve 51, the image-forming zone.

An embodiment of said priciple in a printer will be explained with reference to Figs.6 and 7.

Fig. 6 represents a section through an image-forming medium 10 in the form of a drum 76 rotatable in the direction of arrow 77 and having an insulating layer 43 on which there are disposed a large number of adjacent electrodes 42 which are insulated from one another, extend endlessly in the direction of movement of the drum, and are disposed in and under a dielectric layer 41. Image forming device 84 comprises an earthed sleeve 92 which is rotatable in the direction of arrow 89 around an assembly of toner transport magnets 85 and around a soft-iron knife 88 surrounded by two magnets 86 and 87 of the same polarity. Conductive magnetic toner is fed from tray 91 to the image-forming zone 90 where a very narrow toner brush is formed.

The soft-iron knife 88 has its pointed edge at a distance of about 10 µm from sleeve 92. The sleeve 92 has a thickness of about 50 µm and its outer surface is provided with linear recesses extending parallel to the axis of rotation. The recesses, which are about 5 to 10 µm deep and about 20µm to 200 µm wide, serve to provide a very thin toner layer on sleeve 92 in co-operation with a dispensing knife (not shown).
This avoids any accumulation and widening of the toner brush formed in the image-forming zone 90.

To obtain a toner brush as narrow and sharp as possible the thickness of the sleeve 92 is also important. This thickness is preferably between 10 µm and 100 µm .
An optimum compromise between magnetic field dispersal and mechanical strength is obtained with a thickness of about 50 µm.

An induction electrode element 80 comprises a large number of conductive induction electrodes 82 disposed on a flexible insulating strip 83 of Melinex and each induction electrode 82 is connected via block 81 to a control block (not shown). Good contact between the dielectric layer 41 and induction electrodes 82 is obtained by turning the strip by means of block 81. A thin layer of dielectric material 79, such as the stove enamel already referred to, can be disposed over and around the induction electrodes 82 in order to increase the wearing resistance of the induction electrode element 80.

Fig.7 represents a part of the image-forming medium 10 and induction electrode element 80 in top plan view. The induction electrodes 82 are disposed at the same centres as the electrodes 42 on the image-forming medium 10. Element 80 is so positioned by means of an adjusting device (not shown) that the electrodes 82 and 42 are in register. The width of an induction electrode 82 is preferably the same as, or somewhat larger than, the width of an electrode 42, in order to obtain the maximum capacity between the two.
The thickness of the dielectric layer 79 is for the same reasons small, about 1 to 5 µm. The thickness of the induction electrode 82 is about 5 µm and the width 60 to 70 µm.

By applying a voltage of about 50 volt to an induction electrode 82 it is possible to deposit sufficient toner in the image-forming zone 90 in the manner described above on dielectric layer 41 to obtain good blackening of the image to be printed. Image forming is interrupted when the induction electrode 82 is again earthed.
With the device described above it is possible to obtain prints having a length greater than the circumference of the image-forming medium 10. The image-forming medium 10 can accordingly be made with a very small diameter of, for example, 5 cm, thus making it possible to obtain a compact imaging device.

Of course the invention is not restricted to the embodiments described. For example, in a printer the image-forming medium can first be provided with a uniformly applied layer of toner which is then taken past the image-forming station. If voltage is applied to an electrode path, a brush current will flow and the toner particles will remain fixed to the dielectric layer.
When an electrode path is electrically connected to the sleeve, the sharp magnetic brush will pull off the toner particles from the layer and discharge them from the image-forming zone via the rotating sleeve. A scraper device can scrape off the discharged toner particles from the sleeve.

A man skilled in the art will be able to make all kinds of modifications to the embodiments described which, however, will all come within the scope of the following claims.

## Claims

1. Image forming device for a printer, comprising a magnetic roller having an electrically conductive non-magnetic outer sleeve and magnets disposed inside the sleeve, characterised in that a soft-iron knife (47,88) with a pointed edge is disposed between poles of the same polarity of two magnets (48,49; 86,87) inside the magnetic roller (40,84), the pointed edge of the knife (47,88) extending in the axial direction of the roller and being situated adjacent the non-magnetic outer sleeve (51,92).

2. A device according to claim 1, characterised in that the thickness of the sleeve (51,92) is between 10 µm and 100 µm.

3. A device according to claim 2, characterised in that the thickness of the sleeve (51,92) is about 50 µm.

4. A device according to one of the claims 1 to 3, characterised in that the outside of the sleeve (51,92) is provided with linear recesses disposed parallel to the axis of the roller.

5. A device according to claim 4, characterised in that the recesses have a depth of from 5 µm to 10 µm and a width of from 20 µm to 200 µm.

6. A printer, comprising a movable image-forming medium, with a support (43), the surface of which is formed by a dielectric layer (41), an image-forming device (11) disposed along the trajectory of the image-forming medium, means for supplying electrically conductive toner to a linear zone where the image formation takes place, and a number of electrodes (42) each of which can be actuated by a voltage source and each of which can generate an electric field across the dielectric layer in the image-forming device over part of the zone in which image formation takes place, the electrical field corresponding to an image pattern required to be formed on the image-forming medium, the electrodes (42) being disposed on the movable image forming medium so as to be insulated from one another, being covered by said dielectric layer (41) and extending in the direction of movement of the image-forming medium, wherein the image-forming device is designed according to one of the previous claims.

## Patentansprüche

1. Bildaufzeichnungsvorrichtung für einen Drucker, mit einer Magnetwalze, die eine elektrisch leitfähige, nichtmagnetische äußere Hülse und im Inneren der Hülse angeordnete Magnete aufweist, dadurch gekennzeichnet, daß ein Weicheisen-Messer (47,88) mit einer scharfen Kante zwischen Polen gleicher Polarität zweier Magnete (48,49;86,87) im Inneren der Magnetwalze (40,84) angeordnet ist, wobei die scharfe Kante des Messers (47,88) sich in Axialrichtung der Walze erstreckt und der nichtmagnetischen äußeren Hülse (51,92) benachbart ist.

2. Vorrichtung nach Anspruch 1, dadurch gekennzeichnet, daß die Dicke der Hülse (51,92) zwischen 10 µm und 100 µm beträgt.

3. Vorrichtung nach Anspruch 2, dadurch gekennzeichnet, daß die Dicke der Hülse (51,92) etwa 50 µm beträgt.

4. Vorrichtung nach einem der Ansprüche 1 bis 3, dadurch gekennzeichnet, daß die Außenseite der Hülse (51,92) mit linearen Ausnehmungen versehen ist, die parallel zur Achse der Walze angeordnet sind.

5. Vorrichtung nach Anspruch 4, dadurch gekennzeichnet, daß die Ausnehmungen eine Tiefe von 5 µm bis 10 µm und eine Breite von 20 µm bis 200 µm aufweisen.

6. Drucker mit einem beweglichen Bildaufzeichnungsmedium mit einem Träger(43), dessen Oberfläche durch eine dielektrische Schicht (41) gebildet wird, einer Bildaufzeichnungsvorrichtung (11), die längs der Bewegungsbahn des Bildaufzeichnungsmediums angeordnet ist, Mitteln zum Zuführen von elektrisch leitfähigem Toner zu einer linearen Zone, in der die Bilderzeugung stattfindet, und einer Anzahl von Elektroden (42), von denen jede durch eine Spannungsquelle erregbar ist und in einem Teil der Zone, in der die Bilderzeugung stattfindet, ein die dielektrische Schicht in der Bildaufzeichnungsvorrichtung durchsetzendes elektrisches Feld erzeugen kann, das einem auf dem Bildaufzeichnungsmedium zu bildenden Bildmuster entspricht, wobei die Elektroden (42) so an dem beweglichen Bildaufzeichnungsmedium angeordnet sind, daß sie gegeneinander isoliert und durch die dielektrische Schicht (41) bedeckt sind und in Bewegungsrichtung des Bildaufzeichnungsmediums verlaufen, bei dem die Bildaufzeichnungsvorrichtung nach einem der vorstehenden Ansprüche ausgebildet ist.

## Revendications

1. Dispositif de formation d'image pour une imprimante, comprenant un rouleau magnétique ayant un manchon extérieur électriquement conducteur et non magnétique et des aimants disposés à l'intérieur du manchon, caractérisé en ce qu'une lame en fer doux (47, 88) avec un bord effilé est disposée entre des pôles de même polarité de deux aimants (48, 49 ; 86, 87) à l'intérieur du rouleau magnétique (40, 84), le bord effilé de la lame (47, 88) s'étendant dans la direction axiale du rouleau et étant adjacent au manchon extérieur non magnétique (51, 92).

2. Dispositif selon la revendication 1, caractérisé en ce que l'épaisseur du manchon (51, 92) est comprise entre 10 µm et 100 µm.

3. Dispositif selon la revendication 2, caractérisé en ce que l'épaisseur du manchon (51, 92) est de 50 µm environ.

4. Dispositif selon une quelconque des revendications 1 à 3, caractérisé en ce que l'extérieur du manchon (51, 92) est muni de renfoncements linéaires disposés parallèlement à l'axe du rouleau.

5. Dispositif selon la revendication 4, caractérisé en ce que les renfoncements ont une profondeur comprise entre 5 µm et 10 µm et une largeur comprise entre 20 µm et 200 µm.

6. Imprimante, comprenant un milieu mobile de formation d'image, avec un support (43) dont la surface est formée par une couche diélectrique (41), un dispositif de formation d'image (11) disposé le long de la trajectoire du milieu de formation d'image, des moyens pour fournir un toner électriquement conducteur à une région linéaire où se produit la formation d'image, et un nombre d'électrodes (42) dont chacune peut être activée par une source de tension et dont chacune peut créer un champ électrique à travers la couche diélectrique dans le dispositif de formation d'image sur une partie de la région dans laquelle se produit la formation d'image, le champ électrique correspondant à la configuration de l'image qui doit être formée sur le milieu de formation d'image, les électrodes (42) étant disposées sur le milieu mobile de formation d'image de manière à être isolées les unes des autres, étant recouvertes par ladite couche diélectrique (41) et s'étendant dans la direction du déplacement du milieu de formation d'image, caractérisé en ce que le dispositif de formation d'image est conçu selon l'une des revendications précédentes.
